# EUROPEAN PATENT APPLICATION

(11) **EP 3 502 824 A1**
(43) Date of publication of application: **26.06.2019**
(21) Application number: 17208460.0
(22) Date of filing: 19.12.2017
(51) Int. Cl.: G05D 16/10

(54) **PRESSURE LIMITING VALVE, COMPRESSED AIR SUPPLY SYSTEM**

(71) Applicant: WABCO Europe BVBA, 1170 Brussels (BE)
(72) Inventor: Kroczek, Piotr, 49-313 Lubsza (PL)
(74) Representative: Krause, Martin

(57) **Abstract**

The invention relates to a pressure limiting valve for limiting an inlet pressure to a definable outlet pressure, comprising a housing, an inlet configured to apply the inlet pressure, an outlet configured to provide the outlet pressure, a closing element, wherein the closing element is movable in a first valve space along a main axis and is pressed against a closing stop by a closing spring, a piston, wherein the piston is movable in a second valve space along the main axis and is pressed against the closing element by a spring, and a ventilation membrane for discharging excess pressure, in particular a pressure above the outlet pressure.

According to the invention, the pressure limiting valve is characterized in that the spring is connected on a piston side to the piston by means of a spring seat which is integrally formed with the piston.

## Description

The invention relates to a pressure limiting valve for limiting an inlet pressure to a definable outlet pressure, comprising a housing, an inlet configured to apply the inlet pressure, an outlet configured to provide the outlet pressure, a closing element, wherein the closing element is movable in a first valve space along a main axis and is pressed against a closing stop by a closing spring, a piston, wherein the piston is movable in a second valve space along the main axis and is pressed against the closing element by a spring, and a ventilation membrane for discharging excess pressure, in particular a pressure above the outlet pressure.

Pressure limiting valves are generally known. However, the manufacturing of a pressure limiting valve and in particular its assembly still involves relatively high effort and costs. Such effort in particular relates to the spring which is necessary for opening and closing the valve, in particular to pass air in dependence of a predefined, particularly adjustable, pressure value. In particular, spring seats for limiting valves are implemented as separate parts, wherein said spring seat part is in particular mounted to the piston. Said spring needs to be fixed reliably to ensure a steady functioning of the pressure limiting valve. In particular due to the additional parts and assembly steps needed for such separate part spring seat, the production of a pressure limiting valve still involves a relatively high effort and its complexity as well as susceptibility to error is relatively high.

It is therefore desirable to address at least one of the above problems. Pressure limiting valves should be improved with respect to costs, manufacturing effort and reliability.

An object of the invention is to reduce the number of parts needed for fixing a spring of a pressure limiting valve. In particular, it is an object of the invention to utilize a piston itself and/or a lid itself for fixing the spring of a pressure limiting valve, in particular without having to rely on any further fixing components.

In accordance with the invention, a pressure limiting valve is proposed according to claim 1.

The invention is based on a pressure limiting valve for limiting an inlet pressure to a definable outlet pressure, comprising a housing, an inlet configured to apply the inlet pressure, an outlet configured to provide the outlet pressure, a closing element, wherein the closing element is movable in a first valve space along a main axis and is pressed against a closing stop by a closing spring, a piston, wherein the piston is movable in a second valve space along the main axis and is pressed against the closing element by a spring, and a ventilation membrane for discharging excess pressure, in particular a pressure above the outlet pressure.

According to the invention, the pressure limiting valve is characterized in that the spring is connected on a piston side to the piston by means of a spring seat which is integrally formed with the piston. 'Integrally' in this context particularly means, that the piston and the spring seat are formed as one piece, and/or that the lid and the spring seat are formed as one piece.

The invention is based on the finding that a conventional spring seat, which is normally in the state of the art formed as a separate component, increases the manufacturing and assembly effort, the system complexity as well as the susceptibility to system and/or material failure.

According to the invention, it was specifically recognized that for fixing the spring, in particular fixing the spring to the valve piston, a separate spring seat - i.e. a spring seat as an additional, separate component - can be saved when the neighboring component itself, in particular the valve piston, assumes said fixing function. This fixing function can be obtained by integrally forming a valve seat into or with the surface facing the spring, in particular the piston surface.

Through forming features into said surface that are capable of fixing the spring, in particular by positively locking said spring and/or by applying a clamping force to said spring, said fixing function can be obtained in an advantageous way. In particular, the function of a conventional valve seat can be obtained, without having to provide for an extra valve seat component.

Hence, the spring seat is part of the shape of at least one part of the pressure limiting valve.

Further embodiments of the invention can be found in the dependent claims and show particular advantageous possibilities to realize above described concept in light of the object of the invention and regarding further advantages.

It is preferably suggested that the spring seat is configured to fix the spring at least in a radial direction, in particular in a positively locking manner. Such fixing in a radial direction confines the movement of the spring, in particular the piston side of the spring. Concretely, a confining of the movement of the spring can be achieved by features extending in an axial direction from an inner face of the piston. Among such features can be collars, pins, clips, bars, walls or any other features suitable to confine a radial movement of the piston side of the spring.

In accordance with a further embodiment, it is proposed that the spring seat comprises an inner collar and/or an outer collar. Concretely a combination of inner collar and outer collar, which in particular are concentrically arranged and together form a groove for inserting the spring, can be applied for confining any radial movement of the piston side of the spring. 'Collar' in this context means any feature, in particular any annular or approximately annular feature, which is suitable to confine movement of the piston side of the spring in a radial direction. Alternatively, it is also possible to only use one collar, e. g. an inner collar to confine said radial movement. Also alternatively, it is possible to only use an outer collar to confine said radial movement. By only using one collar, either an inner collar or an outer collar, the fixing of the piston side of the spring can be achieved by only one additional feature on the inner face of the piston. Hence, a simpler design is achieved which leads to less manufacturing effort.

It is accordingly advantageous that the valve seat is configured to fix the spring in an axial direction and/or tangential direction, in particular by applying a clamping force. Concretely, such embodiment implies that the piston side of the spring is fixed in such a way that movement is confined in axial direction and/or tangential direction. This case in particular can be achieved by a dimensioning of inner and/or outer collar that results in a tight fit between spring and collar, such that a clamping force holds the spring in place and inhibits any movement of the fixed side of the spring. Furthermore, other means of fixing the spring are possible, such as clips, hooks or screws. By fixing the spring and/or a tangential direction, a safe and reliable connection between spring and piston is achieved, independent of the operation of the pressure limiting valve and of assembly/disassembly procedures. This is in particular because the spring, in particular the piston side of the spring, stays in place, even if the spring is tensile-loaded, i.e. pulled.

In accordance with a further embodiment, it is proposed that the spring is bonded, in particular welded or glued, to the piston. By means of such bonding, a reliable and safe connection between piston and spring can be achieved. In case of using an adhesive, the manufacturing and assembly of said connection is relatively simple: an adhesive has to be applied in the contact zone, the spring then has to be brought into contact with the piston for a specific time to allow for curing in order to establish a bond.

It is accordingly advantageous that the second valve space is confined by a lid, wherein the axial position of the lid along the main axis is adjustable. In such embodiment, the second valve space can be opened by a detachable lid, making it possible to access the piston and the spring, e.g. for repairing and maintenance purposes. Also through the ability to adjust the axial position of the lid, it is possible to adjust the spring force of the spring and consequently to influence the output pressure of the pressure limiting valve.

A preferred embodiment suggests that the lid comprises an external thread configured to engage with an internal thread of the housing. In such embodiment, the axial position of the lid can be adjusted in a relatively simple manner, making it possible to adjust the spring force of the spring and consequently, the output pressure of the pressure limiting valve. Such adjusting means can be further improved by providing a visible scale on or near said thread, for example at the circumference of the lid or on the housing. Via such scale, the angular position of the lid in relation to the housing can be indicated, whereas the angular position corresponds to a certain axial position due to the defined thread pitch of the threaded connection and consequently, to a certain spring force. This makes it easier for a user to set a predefined spring force and thus, outlet pressure of the pressure limiting valve.

A preferred embodiment suggests that the spring is connected on a lid side to the lid by means of a lid spring seat. Concretely, the lid side of the spring, which is opposite of the piston side of the spring, is connected to the lid, analogously to the piston side, by means of a lid spring seat.

In accordance with a further embodiment, it is proposed that the lid spring seat is essentially formed like the spring seat according to one of the preceding claims. Such lid spring seat in particular is formed integrally with the lid, leading to the same or similar advantages as described above for the piston side of the spring, and the spring seat on the piston, accordingly. In particular, a separate spring seat can be saved, as the fixing function of a conventional, separate spring seat component is assumed by the lid itself. In such embodiment, the features described above for the spring seat on the piston side of the spring, can be applied to the lid spring seat, leading to a same or similar advantages. In particular the spring can be fixed at least in a radial direction by means of one or more collars or other above described features suitable to confine the movement of the spring, in particular the lid side of the spring in one or more directions.

Also the spring seat and the lid spring seat do not necessarily have to be identical but can be formed according to different embodiments. For example, in a first embodiment, both spring seats are formed according to the concept of the invention: that means, that the spring seat is formed integrally with the piston and the lid spring seat is formed integrally with the lid of the pressure limiting valve.

In a second embodiment, the spring seat is formed integrally with the piston, according to the concept of the invention, whereas the lid spring seat is formed in a conventional way, i.e. by a separate lid spring seat component.

In a third embodiment, the spring seat is formed in a conventional way, i.e. by a separate spring seat component, whereas the lid spring seat is formed integrally with the lid, according to the concept of the invention.

For example the spring seat can comprise an inner collar and an outer collar, whereas the lid spring seat only comprises one collar, for example an inner collar. Also it is possible that for example the spring seat fixes the piston end of the spring by means of a clamping force, whereas the lid spring seat only confines the radial movement of the lid side of the spring and a positively locking manner. Thus, any suitable combination of spring seat and lid spring seat is possible that serves best the requirements of a specific application.

A preferred embodiment suggests that the closing spring is connected on a socket side to a closing socket, wherein the socket side is opposite of a closing element side. The connection between the socket side of the closing spring to the closing socket can be formed analogously to the connection types between the spring and the spring seat of the piston in the above described embodiments.

In accordance with a further embodiment, it is proposed that the ventilation membrane is positioned in the closing socket. Concretely, the ventilation membrane can be of the type of a breather valve permitting air flow only in one direction, in this case from a ventilation channel inside the closing socket to an atmosphere outside the closing socket. Such ventilation membrane ensures that excess pressure inside the pressure limiting valve can be blown off, but at the same time air from the atmospheric cannot enter the pressure limiting valve through the ventilation channel.

The invention also leads to a compressed air supply system for a vehicle with a pressure limiting valve according to the concept of the invention. The advantages of the pressure limiting valve according to the invention are also advantageous for the compressed air supply system, and ultimately the vehicle in which the compressed air supply system is applied. In particular, the more simple design, which leads to less weight and a smaller susceptibility to system and/or material failure, is particularly advantageous for an application in a vehicle, where weight and robustness considerations are important design factors.

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter which show in:
- FIG. 1: an illustration of an embodiment of a pressure limiting valve according to the concept of the invention,
- FIG. 2A: a schematic side view of a spring,
- FIG. 2B: a schematic top view of a spring,
- FIG. 3A: a schematic side view of a detail of a further embodiment,
- FIG. 3B: a schematic side view of a detail of another embodiment,
- FIG. 3C: a schematic side view of a detail of a another embodiment,
- FIG. 3D: a schematic side view of a detail of another embodiment.

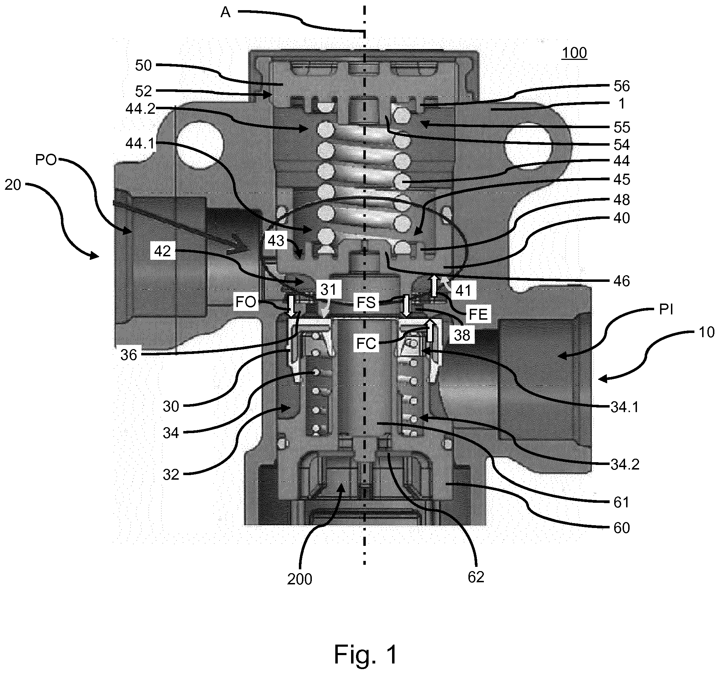

Figure 1 shows an illustration of an embodiment of a pressure limiting valve 100 according to the concept of the invention. The pressure limiting valve 100 comprises a housing 1, an inlet 10 connected to a first valve space 32 and an outlet 20 connected to a second valve space 42.

The first valve space 32 and the second valve space 42 are connected by a passage 38 and arranged coaxially along a common main axis A. A closing element 30 is positioned within the first valve space 32, movable along the main axis A. The closing element 30 is pressed against a closing stop 36 by a closing spring 34. The closing spring 34 is on a closing element side 34.1 connected to the closing element 30. On an opposite socket side 34.2, the closing spring is connected to a closing socket 60, which is inserted into the first valve space 32, thus closing the first valve space 32 on the side opposite of the passage 38. The closing stop 36 is located between the first valve space 32 and the second valve space 42, thus confining the passage 38. By adjusting the axial position of the closing socket 60 within the first valve space 32, a closing force FC, pressing the closing element 30 against the closing stop 36, can be adjusted. Such adjustment can in particular be achieved, although not shown in Fig. 1, by a threaded connection between the closing socket 60 and the housing 1 of the pressure limiting valve 100. By turning the closing socket 60 by said threaded connection into the first valve space 32, the closing force FC can be increased. Vice versa by turning the closing socket 60 into the opposite direction, out of the first valve space 32, the closing force FC can be decreased.

A ventilation membrane 62 is located within the closing socket 60 at the end of a ventilation channel 61. By means of the ventilation membrane 62, air can flow from the ventilation channel 61 into the atmosphere 200, but not the other way around.

A piston 40 is located within the second valve space 42, also movable along the main axis A. The piston 40 is pressed against the closing element 30 by a spring 44 with a spring force FS. Said spring 44 is connected on a piston side 44.1 to the piston 40 by means of a spring seat 45 according to the concept of the invention. Analogously, the spring 44 - on an opposite, lid side 44.2 - is connected to a lid to 50 by means of a lid spring seat 55. The lid 50 is connected to the housing 1 by means of a threaded connection and closes the second valve space 42. The lid 50 for this purpose has an external thread 52, which engages with a corresponding internal thread 53 of the housing 1. By turning the lid 50 into the second valve space 42, the spring force FS is increased. Vice versa, by turning the lid 50 into the opposite direction, out of the second valve space 42, the spring force FS is decreased.

The valve seat 45 in this embodiment is located on an inner face side 43 of the piston 40 and features an inner collar 46 and an outer collar 48. Both collars 46, 48 are integrally formed, each as an integral part of the piston 40, that means, that the piston 40 and the valve seat 45 are formed as one piece, in particular made of one material. By such integral forming of the valve seat 45, the piston 40 itself assumes the function of fixing the spring 44. Hence, additional components, in particular an additional valve seat, can be saved. The valve seat 45 restricts the movement of the piston side 44.1 of the spring 44, in particular in a radial direction DR. This is achieved in a positively locking manner by the form of the inner collar 46 and the outer collar 48. In such preferred embodiment, it can be sufficient to fix the spring 44 by only inhibiting its radial movement as shown here, in particular because the spring force FS presses the piston side 44.1 against the piston 40, hence not requiring any additional axial fixation of the spring 44 to the piston 40. However, it is also possible to further fix the spring 44 to the piston 40, for example by bonding, in particular gluing or welding, the spring 44 to the piston 40. Further, the diameters of the inner collar 46 and the outer collar 48 can be varied in such a way that the spring 44 is clamped in between the collars 46, 48. By such means, the spring 44, in particular the piston side 44.1, would be, in addition to the positive interlocking, clamped by one or both collars 46, 48. By means of such clamping, movement of the piston side 44.1 relative to the piston 40 is additionally restricted in an axial direction DA as well as in a tangential direction DT. Also, it is possible to only rely on one collar 46, 48 for achieving any of the above described fixing functions. For example, in some embodiments, only an inner collar 46 can be sufficient to fix the piston side 44.1 of the spring 44 either by positively interlocking or by clamping or any other above described means of fixation. Analogously, in some embodiments, only an outer collar 48 can be sufficient to fulfill this task. Also, the inner collar 46 and/or the outer collar 48 don't necessarily have to be circular, but can be of any other shape suited to fix the spring 44, e. g. an octagonal shape.

In the following, the function of the pressure limiting valve 100 will be described in further detail. Air with an inlet pressure PI is applied to the inlet 10. From there it flows into the first valve space 32 and exerts a force on the face side 31 of the closing element 30. In case the inlet pressure PI exceeds a certain value, the closing element 30 is pressed downward by an opening force FO against the closing force FC, enabling the air to flow through the passage 38 into the second valve space 42. With a set downward movement of the closing element 30, the piston 40 is also pressed downward by the spring 44, such that the piston is in contact with the face side 31 of the closing element 30. From the second valve space 42, the air continues to flow to the outlet 20 of the pressure limiting valve 100. In case the inlet pressure PI exceeds a maximum threshold value, the downward movement of the closing element 30 continues whereas the downward movement of the piston 40 is stopped, in particular by the closing stop 36 and/or by an excess force FE of the inlet pressure PI acting against an outer face side 41 of the piston 40. When this happens, the piston 40 is no longer in contact with the closing element 30, enabling the air to flow into the ventilation channel 61 and consequently through the ventilation membrane 62 into the atmosphere 200.

Through the above described functions, the pressure limiting valve 100 ensures that the output pressure PO always ranges between a minimum value POMIN and a maximum value POMAX. In case the inlet pressure PI decreases below the minimum value POMIN, the closing element 30 is pressed against the closing stop 36 by the closing spring 34, thus closing the passage 38 and inhibiting the flow of air. In case the inlet pressure PI exceeds the maximum value POMAX, excess flows through a gap between the closing element 30 and the piston 40, and further through the ventilation channel 61 and the ventilation membrane 60 into the atmosphere 200.

Thus, a predefined outlet pressure PO characterizing the pressure limiting valve 100, consists at least of the maximum value POMAX and the minimum value POMIN.

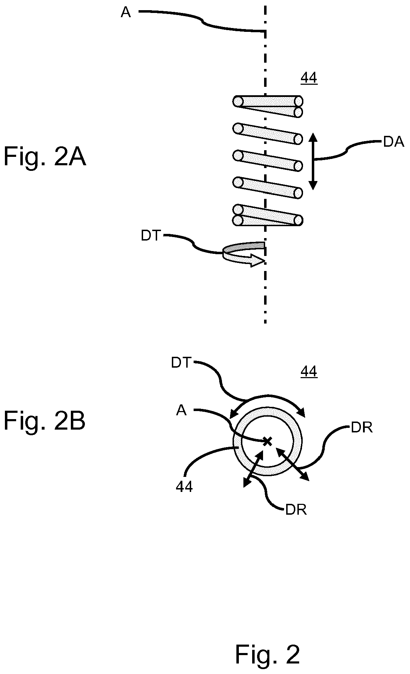

FIG. 2A shows a schematic side view of a spring 44, In particular indicating the axial direction DA, which runs parallel to the main axis A. Further, a tangential direction DT is indicated, which basically indicates the direction of movement of the spring 44 being turned around the main axis A. Figure to be shows the same spring 44, however from a top view. Besides the tangential direction DT, two arrows for indicating the radial direction DR are shown as an example. The radial direction DR is basically any direction perpendicular to the main axis A.

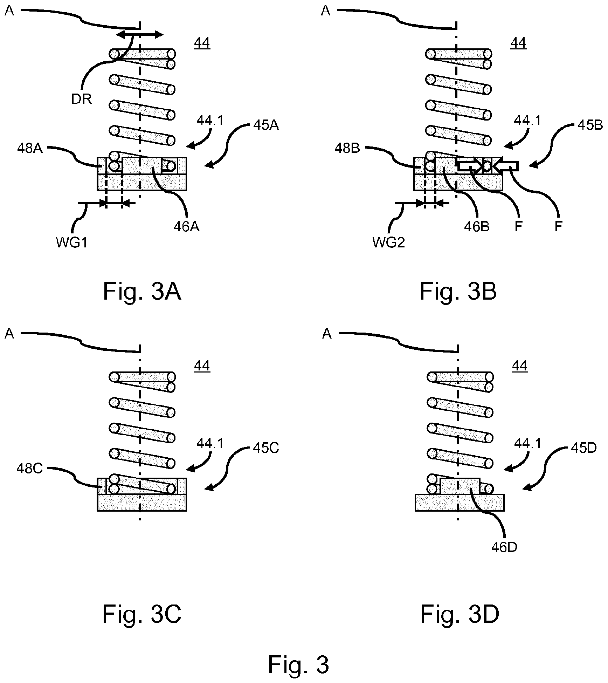

Fig. 3A shows a schematic side view of a detail of a further embodiment. An excerpt of a valve seat 45A is shown, without showing the remaining part of the piston, which the valve seat 45A is an integral part of. The valve seat 45A comprises an inner collar 46A and an outer collar 48A, whereas the collars 46A, 48A are arranged concentrically to each other and are radially spaced apart from each other by a groove width WG1. In the embodiment, the groove width WG 1 is of such width that a movement of the piston side 44.1 of the spring 44 in a radial direction DR is inhibited. This inhibiting of radial movement is achieved by the form of the collars 46A, 48A, positively locking the piston side 44.1 in the radial direction DR. However, a movement of the spring in a tangential direction DT, that means turning the spring 44 around the main axis A, is still possible.

Fig. 3B shows a further embodiment where a second groove width WG2 describes the radial distance between an inner collar 46B and an outer collar 48B. The second groove width WG2 is smaller than the first groove with WG1 shown in figure 3A. Because of such narrow groove width WG2, the piston side 44.1 of the spring 44 is clamped in between the inner collar 46B and the outer collar 48B. Thus, a clamping force F, in addition to the positive interlocking, fixes the spring 44 and inhibits any further movement of the piston side 44.1, in particular in an axial direction DA and a tangential direction DT, and also in a radial direction DR.

Fig. 3C shows another embodiment of the invention. A valve seat 45C comprises an outer collar 48C, inhibiting movement of the piston side 44.1 of the spring 44 in a radial direction DR. In this embodiment, no inner collar is needed to fix the spring 44 to the piston. Also, although not shown here, the inner diameter of the outer collar 48C can be decreased to ensure a tight fit between outer collar 48C and piston side 44.1 such that a clamping force is exerted, analogously to the embodiment shown in Fig. 3B. Such clamping force would further fix the piston side 44.1 to the valve seat 45C and consequently, to the piston 40. Fig. 3D shows a further embodiment of the invention. The valve seat 45D comprises an inner collar 46D, inhibiting movement of the piston side 44.1 of the spring 44 in a radial direction DR. Also, although not shown here, the outer diameter of the inner collar 46D can be increased to ensure a tight fit between inner collar 46D and piston side 44.1 such that a clamping force is exerted, analogously to the embodiment shown in Fig. 3B. Such clamping force would further fix the piston side 44.1 to the valve seat 45D and consequently, to the piston.

The shown in Fig. 3C as well as Fig. 3D, offer the advantage of a simple design, as the fixing function of each of the embodiments only relies on one collar instead of two collars.

### List of References

- 1: housing
- 10: inlet
- 20: outlet
- 30: closing element
- 31: face side of the closing element
- 32: first valve space
- 34: closing spring
- 34.1: closing element side of the closing spring
- 34.2: socket side of the closing spring
- 36: closing stop
- 38: passage
- 40: piston
- 41: outer face side of the piston
- 42: second valve space
- 43: inner face side of the piston
- 44: spring
- 44.1: piston side of the spring
- 44.2: lid side of the spring
- 45, 45A - D: spring seat
- 46, 46A - D: inner collar
- 48, 48A - D: outer collar
- 50: lid
- 52: external thread of the lid
- 53: internal thread of the housing
- 55: lid spring seat
- 60: closing socket
- 61: ventilation channel
- 62: ventilation membrane
- 200: atmosphere
- 1000: compressed air supply system
- 1002: vehicle

- A: main axis
- DA: axial direction
- DR: radial direction
- DT: tangential direction
- F: clamping force
- FC: closing force
- FE: excess force
- FO: opening force
- FS: spring force
- PDEF: predefined pressure
- PI: inlet pressure
- PO: outlet pressure
- POMAX: Maximum outlet pressure
- POMIN: Minimum outlet pressure
- WG1, WG2: Groove width

## Claims

1. Pressure limiting valve (100) for limiting an inlet pressure (PI) to a definable outlet pressure (PO), comprising
- a housing (1),
- an inlet (10) configured to apply the inlet pressure (PI),
- an outlet (20) configured to provide the outlet pressure (PO),
- a closing element (30), wherein the closing element (30) is movable in a first valve space (32) along a main axis (A) and is pressed against a closing stop (36) by a closing spring (34),
- a piston (40), wherein the piston (40) is movable in a second valve space (42) along the main axis (A) and is pressed against the closing element (30) by a spring (44), and
- a ventilation membrane (62) for discharging excess pressure, in particular a pressure above the outlet pressure (PO),
**characterized in that**
- the spring (44) is connected on a piston side (44.1) to the piston (40) by means of a spring seat (45, 45A, 45B, 45C, 45D) which is integrally formed with the piston (40).

2. Pressure limiting valve (100) of claim 1, **characterized in that** the spring seat (45, 45A, 45B, 45C, 45D) is configured to fix the spring (44) at least in a radial direction (DR), in particular in a positively locking manner.

3. Pressure limiting valve (100) of claim 1 or 2, **characterized in that** the spring seat (45, 45A, 45B, 45C, 45D) comprises an inner collar (46, 46A, 46B, 46C, 46D) and/or an outer collar (48, 48A, 48B, 48C, 48D).

4. Pressure limiting valve (100) of one of the preceding claims, **characterized in that** the valve seat (45, 45A, 45B, 45C, 45D) is configured to fix the spring in an axial direction (DA) and/or tangential direction (DT), in particular by applying a clamping force (F).

5. Pressure limiting valve (100) of one of the preceding claims, **characterized in that** the spring (44) is bonded, in particular welded or glued, to the piston (40).

6. Pressure limiting valve (100) of one of the preceding claims, **characterized in that** the second valve space (42) is confined by a lid (50), wherein the axial position of the lid (50) along the main axis (A) is adjustable.

7. Pressure limiting valve (100) of claim 6, **characterized in that** the lid (50) comprises an external thread (52) configured to engage with an internal thread (53) of the housing (1).

8. Pressure limiting valve (100) of claim 6 or 7, **characterized in that** the spring (44) is connected on a lid side (44.2) to the lid by means of a lid spring seat (55).

9. Pressure limiting valve (100) of one of claims 6 to 8, **characterized in that** the lid spring seat (55) is essentially formed like the spring seat (45, 45A, 45B, 45C, 45D) according to one of the preceding claims.

10. Pressure limiting valve (100) of one of the preceding claims, **characterized in that** the closing spring (34) is connected on a socket side (34.2) to a closing socket (60), wherein the socket side (34.2) is opposite of a closing element side (34.1).

11. Pressure limiting valve (100) of one of the preceding claims, **characterized in that** the ventilation membrane (62) is positioned in the closing socket (60).

12. Compressed air supply system (1000) for a vehicle (1002) with a pressure limiting valve (100) of one of the preceding claims.
